**Europäisches Patentamt**

(19) **European Patent Office**

**Office européen des brevets**

(11) Veröffentlichungsnummer: **0 064 567**
**B1**

(12) # EUROPÄISCHE PATENTSCHRIFT

(45) Veröffentlichungstag der Patentschrift:
**11.07.84**

(51) Int. Cl.³: **A 01 D 90/10**, B 60 P 1/26

(21) Anmeldenummer: **81103544.3**

(22) Anmeldetag: **09.05.81**

(54) **Ladewagen mit hydraulisch verschwenkbarer Rückwand.**

(43) Veröffentlichungstag der Anmeldung:
**17.11.82 Patentblatt 82/46**

(45) Bekanntmachung des Hinweises auf die Patenterteilung:
**11.07.84 Patentblatt 84/28**

(84) Benannte Vertragsstaaten:
**AT CH DE FR GB IT LI NL**

(56) Entgegenhaltungen:
**DE - A - 2 019 055**
**DE - U - 6 601 710**
**DE - U - 6 929 397**

(73) Patentinhaber: **Klöckner-Humboldt-Deutz AG**
**Zweigniederlassung Fahr, D-7702 Gottmadingen (DE)**

(72) Erfinder: **Schaible, Siegfried, Breslauerstrasse 15,**
**D-7700 Singen/Htwl. (DE)**
Erfinder: **Schildbach, Wolfgang, Schrotzburgstrasse 7,**
**D-7702 Gottmadingen (DE)**

ACTORUM AG

## Beschreibung

Die Erfindung betrifft einen Ladewagen mit einem Roll- oder Kratzboden, einen über einem festen Aufbau angeordneten erhöhbaren Aufbau, sowie einer am Entladeende mittels mindestens eines einseitig am festen Aufbau angelenkten Druckzylinders über einen Aushebemechanismus ausschwenkbare Rückwand, die über eine Drehachse am freien Ende eines am festen Aufbau schwenkbar angelenkten Bügels, der in seiner untersten Stellung eine etwa horizontale Lage einnimmt, schwenkbar angelenkt ist und über wenigstens einen federbelasteten Riegel am festen Aufbau verriegelbar ist.

Zweck der Verschwenkung der Rückwand eines Ladewagens mittels Druckzylindern ist es, Erleichterungen für die Bedienungsperson zu schaffen, welche somit vom Schleppersitz aus und ohne Kraftaufwand das Schwenken der Rückwand vornehmen kann.

Aus dem DE-U- 6 929 397 ist eine Ausführung bekannt, wobei eine Rückwand frei pendelnd an einem schwenkbeweglichen Hebelarm angelenkt ist. Das Ausschwenken der Rückwand wird hier ebenfalls mittels eines Hydraulikzylinders vorgenommen, wobei der Hydraulikzylinder über einen Seilzug den schwenkbeweglichen Hebelarm nach oben verschwenkt und somit die am Hebelarm angelenkte Rückwand mit hochzieht. Auf dem ersten Verschwenkweg des Hydraulikzylinders wird ein federbelasteter Riegel angehoben, womit die Rückwand nach hinten auspendeln kann. Die ausgependelte Stellung ist dabei die Stellung zum «Grünfutterentladen».

Nachteilig bei der genannten Anordnung ist das umständliche Wiedereinrasten der Rückwand wobei mehrere Bremsmanöver erforderlich sein können, bis die Rückwand wieder in Verriegelungsstellung kommt. Beim Abbremsen aus höherer Geschwindigkeit kann zwar sicher eingerastet werden, jedoch gehen die dabei entstehenden Schläge auf die Verriegelungseinrichtung zu Lasten der Standzeit dieser Elemente, wobei Beschädigungen nicht ausgeschlossen sind. Durch die nicht sehr weite Auspendelung der Rückwand in «Grünfutterentladestellung» kann es zu Behinderungen durch das querstehende Rahmenteil der Rückwand kommen. Beim Verschwenken des Hebels zum Erreichen der Dürrfutter-Entladestellung, schwenkt die Rückwand infolge der Veränderung ihrer Schwerpunktlage in Bezug auf ihre Schwenkachse in ihre Ausgangslage zurück, bis sie am Hebel zum Anliegen kommt. Durch das Zurückschwenken der Rückwand ist ein unbehindertes Entladen nicht möglich, da ein Teil der benötigten Entladefläche durch die Rückwand abgedeckt wird.

Einstellbare Zwischenstellungen der Rückwand im Grünfutterbereich sind in der gezeigten Anordnung nicht möglich.

Weiterhin ist eine Ausführung aus dem DE-U- 6 601 710 bekannt, wobei eine mittels Hydraulikzylinder hochklappbare Rückwand verwendet wird. Der Ladewagen weist im gezeigten Beispiel zwar einen Aufbau für Dürrfutter bzw. für Heu auf, jedoch ist dieser nicht klappbar ausgebildet. Für niedere Stallungen bzw. niedere Stalleinfahrten kann man, beim Grünfuttereinbringen, wobei das Ladegut bis zur Oberkante der festen Seitenwände geladen wird, auf einen abklappbaren bzw. abnehmbaren Dürrfutteraufbau, welcher hierbei nicht benötigt wird, nicht verzichten. Geht man von der Annahme aus, dass im gezeigten Beispiel der Dürrfutteraufbau abnehmbar ausgebildet ist, so ist diese Anordnung dennoch für das Entladen von Grünfutter in niederen Stallungen ungeeignet, da die hochschwenkbare Rückwand bereits in geschlossener Stellung über die Oberkante der festen Seitenwände hinwegragt, wobei beim Ausheben der Rückwand die obere Kante der Rückwand die Oberkante der festen Seitenwände noch weiter überragt.

Der Erfindung liegt nunmehr die Aufgabe zugrunde, die genannten Nachteile zu vermeiden und eine vom Schleppersitz aus bedienbare Rückwand derart auszubilden, wobei ein problemloses Entladen von Grünfutter in niederen Stallungen ermöglicht wird, sowie ein ungehinderter Durchgang beim Dürrfutterentladen gewährleistet ist.

Diese Aufgabe wird gemäss der Erfindung dadurch gelöst, dass ein Aushebemechanismus der ausschwenkbaren Rückwand aus einem mit radialem Abstand zu der Schwenkachse der Rückwand drehbar gelagerten Hebel gebildet wird, dessen freies Ende durch den am festen Aufbau angelenkten Druckzylinder beaufschlagt wird und einen Mitnehmer, der in den Schwenkbereich der Rückwand bringbar ist, aufweist, sowie aus einer am Hebel angelenkten und zum Riegel geführten Entriegelungseinrichtung und einem weiteren, in den Schwenkbereich des Bügels bringbaren Mitnehmer.

Vorteilhafterweise wird vorgeschlagen, den Mitnehmer für den Bügel durch eine Anschlagfläche am Hebel oder durch einen an der beweglichen Rückwand angebrachten Anschlag, welcher bei einem bestimmten Verschwenkwinkel der Rückwand auf dem Bügel aufsitzt, auszubilden.

Um ein sicheres Verriegeln der Rückwand zu gewährleisten ist es vorteilhaft zwischen dem Bügel und der Rückwand eine Zugfeder anzubringen, welche entgegen Kraftrichtung des Druckzylinders wirkt, womit das Einrasten des Riegels gewährleistet wird.

In einer weiteren Ausgestaltung der Erfindung wird vorgeschlagen, den Anlenkpunkt des Druckzylinders am festen Aufbau, bezogen auf die Fahrtrichtung, hinter und unterhalb der Schwenkachse des Bügels anzubringen und den Anlenkpunkt des Hebles derart zuzuordnen, dass der lotrechte Abstand "L" der Wirkungslinie "W" des Druckzylinders zur Schwenkachse des Bügels in unterster Stellung der Rückwand annähernd "Null" beträgt und mit dem Anheben anwächst. Dadurch wird sichergestellt, dass bis zum Erreichen der «Grünfutterstellung» der Rückwand, keine nach oben gerichtete Kraftkomponente auftritt, welche ein unbeabsichtigtes Anheben des Bügels hervorruft.

Um ein folgerichtiges Anheben des Bügels erst nach Erreichen der Grünfutterentlade-Stellung der Rückwand zu gewährleisten wird vorgeschlagen, dass der Mitnehmer für den Bügel erst bei der genannten Stellung wirksam wird.

In einer weiteren Ausgestaltung der Erfindung wird vorgeschlagen, dass beim Verschwenken des Hebles aus der Verriegelungsstellung auf seinem ersten Schwenkweg, bevor der Mitnehmer für die Rückwand zum Anliegen kommt, die Entriegelungseinrichtung für den Riegel betätigt.

Um ein Verwinden der Rückwand beim Ausheben zu vermeiden und somit Beschädigungen auszuschliessen, wird weiter vorgeschlagen den Aushebemechanismus sowie die Verriegelungseinheit beidseitig des Ladewagens anzubringen.

Vorteilhafterweise wird weiter vorgeschlagen in den Aushebemechanismus Schaltelemente einzubauen, welche steuernd in den Stromkreis eingreifen, über welchen ein Wegeventil beaufschlagt wird, das einen Druckzylinder zum Ausheben der Rückwand ansteuert.

Das absatzweise Anheben der Rückwand bzw. des Bügels bringt den Vorteil mit sich, dass beim Grünfutterladen nur ein Teil der hinteren Verschlusswand angehoben werden muss, womit der Energiebedarf zum Anheben auf ein Minimum gesenkt wird, im Gegensatz zu einstückigen Verschlusswänden.

Ein Ausführungsbeispiel der Erfindung wird in den nachfolgenden Zeichnungen dargestellt und im folgenden näher beschrieben.

Es zeigen:

Fig. 1: Eine erfindungsgemässe Rückwand eines Ladewagens in Verriegelungsstellung in Seitenansicht gesehen.

Fig. 2: Eine Rückwand nach Fig. 1 in ausgehobener «Grünfutterentladestellung».

Fig. 3: Eine Rückwand nach Fig. 1 in ausgehobener «Dürrfutterentladestellung».

Fig. 4: Eine Rückwand nach Fig. 1 in Hinteransicht.

Fig. 5: Schematisch einen Stromversorgungs- und Funktionsplan zur Ausführungsform nach Fig. 1 bis 4.

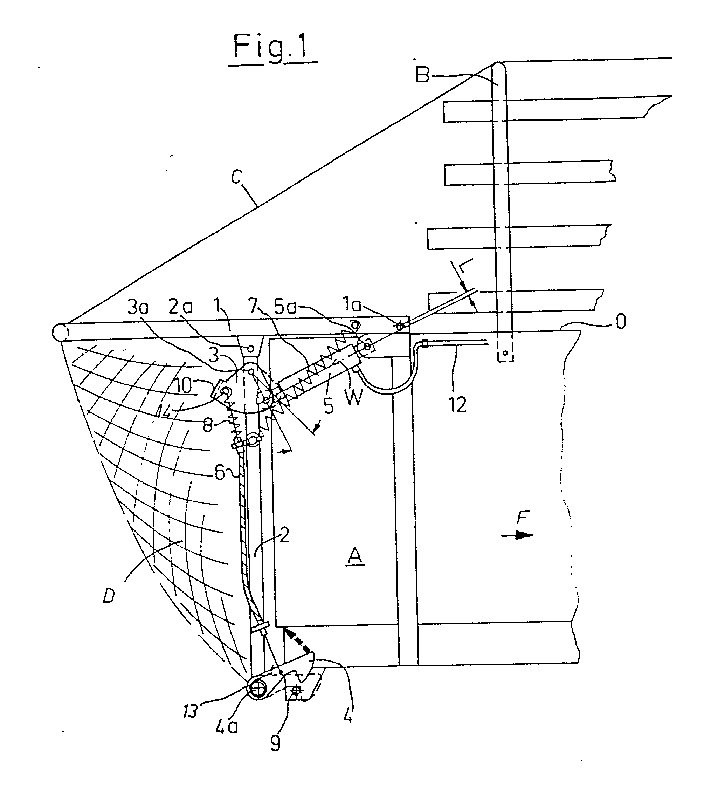

Figur 1 zeigt eine Teilansicht eines Ladewagens. Über einem nicht näher dargestellten Kratzboden sind feste Seitenwände A angebracht. Im oberen Bereich der festen Seitenwände A ist ein klappbarer Aufbau B angelenkt. Ebenfalls im oberen Bereich der festen Seitenwand ist in der Drehachse 1a ein etwa horizontal ausgerichteter Bügel 1 angelenkt, welcher eine Schwenkachse 2a aufweist, in welcher eine Rückwand 2 schwenkbar gelagert ist. Die Rückwand 2 nimmt dabei in der gezeigten Stellung eine etwa vertikale Verriegelungsstellung ein.

Über einen Riegel 4 der einen am festen Aufbau angebrachten Bolzen 9 übergreift und um die Achse 4a an der Rückwand 2 schwenkbar gelagert ist, wird die Rückwand 2 mit dem festen Aufbau A verriegelt.

Ein Seilzug 6, welcher an der Rückwand 2 geführt wird, ist einenends mit dem freien Ende des Riegels 4 verbunden und anderenends an einem an der Rückwand 2 um eine Schwenkachse 3a drehbar gelagerten Hebel 3. Der Seilzug ist dabei an einem Bolzen 14 des Hebels 3 befestigt, an welchem ebenfalls eine Zugfeder 8 angreift, die an der Rückwand 2 angelenkt ist. Durch die Zugfeder 8 resultiert eine Kraft, welche den Hebel 3 nach vorne drückt.

Ein einfach wirkender Hydraulikzylinder 5 ist am festen Aufbau A über die Achse 5a und am Hebel 3 über die Achse 5b angelenkt.

Der Hebel 3 weist einen Mitnehmer 10 auf, der in den Schwenkbereich des Bügels 1 geführt werden kann. Ausserdem weist der Hebel im Bereich der Achse 5b des Hydraulikzylinders einen Mitnehmer 11 auf, der in den Schwenkbereich der Rückwand 2 ragt. Zwischen dem Bügel 1 und der Rückwand 2 ist eine Zugfeder 7 angebracht, welche entgegen der Wirkungslinie "W" des Hydraulikzylinders 5 gerichtet ist. Die gestrichelte Darstellung des Riegels 4 in Figur 1 zeigt ihn in der Verriegelungsstellung, wobei sich der Hydraulikzylinder in seiner eingefahrenen Stellung befindet und der Mitnehmer 11 noch nicht an der Rückwand 2 anliegt. Zwischen dem rückwärtigen Teil des Bügels 1 und der Rückwand 2 ist eine rucksackartige Netzbespannung D angebracht. Von der äusseren Begrenzung des freien Schenkels des Bügels 1 und über den höchsten Punkt des klappbaren Aufbaus B sind Seile C gespannt, welche eine obere flexible Begrenzung des Laderaumes für Dürrfutter darstellen.

Der Funktionsablauf des Aushebemechanismus der Rückwand 2 ist wie folgt:

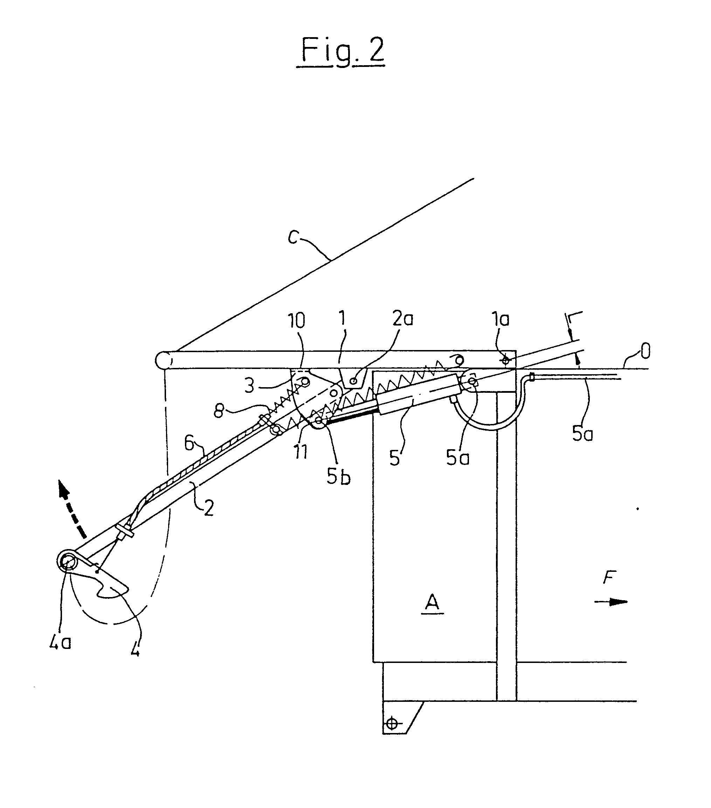

Der Hydraulykzylinder 5, welcher über eine Druckleitung 12 mit Druckmittel beaufschlagt wird, schwenkt den Hebel 3 um die Schwenkachse 3a. Auf seinem ersten Schwenkwinkel $\alpha$, wo der Mitnehmer 11 noch nicht wirksam ist, wird lediglich der Seilzug 6 angezogen, womit der Riegel 4, entgegen einer Drehfeder 13, angehoben wird und somit die Rückwand 2 freigibt. Bei weiterem Ausfahren des Hydraulikzylinders 5 wird, infolge des Auftreffens des Mitnehmers 11 auf die Rückwand 2, die Rückwand 2 um die Schwenkachse 2a nach oben verschwenkt bis die Anschlagfläche des Mitnehmers 10 am Bügel 1 ansteht. Diese Stellung, in Figur 2 dargestellt, reicht aus, um Grünfutter, welches bis zur Oberkante 0 des festen Aufbaues A geladen werden kann, problemlos zu entladen. Um vor Erreichen der «Grünfutter-Entladestellung» (Fig.2) der Rückwand 2 ein vorzeitiges Anheben des Bügels 1 infolge eines Drehmomentes durch die Kraftrichtung des Druckzylinders in Bezug auf die Drehachse 1a zu verhindern, sind die Anlenkpunkte derart angeordnet, dass der Hebelarm "L" bis zum Erreichen der genannten Stellung relativ klein gehalten wird und erst beim Überschreiten dieser Stellung mehr anwächst.

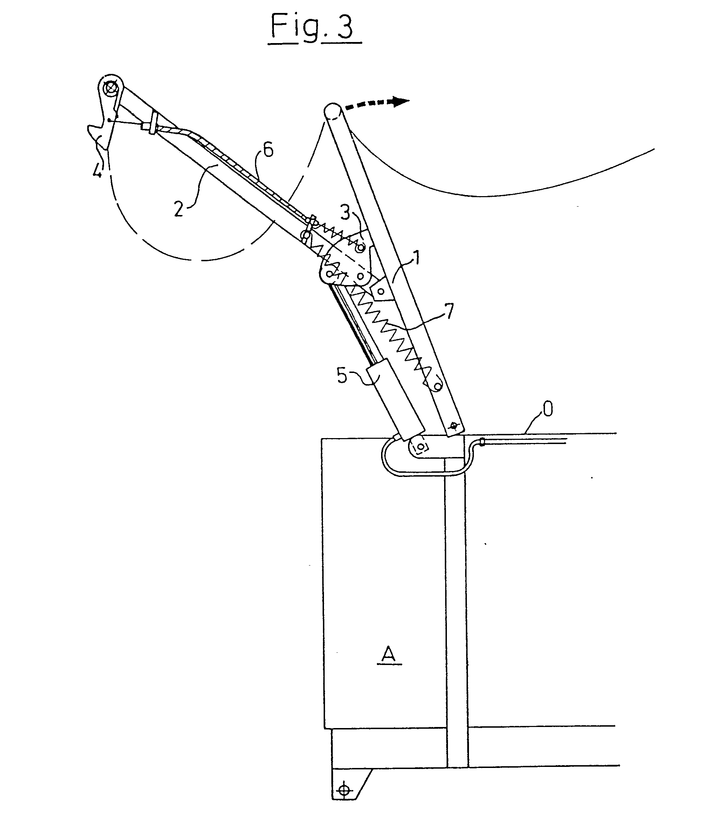

Ist die Rückwand 2 bis zur Entladung für Grünfutter angehoben, so liegt der Mitnehmer 1o auf dem Bügel 1 auf. Bei weiterer Beaufschlagung des Hydraulikzylinders 5 wird nun auch der Bügel 1 mit samt der Rückwand 2 bis in eine obere Stellung, wie in Figur 3 dargestellt, angehoben, in welcher der freie Durchgang zum Entladen von Dürrfutter, das in der Regel bis zur oberen Begrenzung eines klappbaren Aufbaues B geladen wird, gewährleistet ist. Die äussere Begrenzung der freien Schenkel der Rückwand 2 und des Bügels 1 befinden sich dabei etwa auf der Höhe der oberen Begrenzung des abklappbaren Aufbaues B.

Der Schliessvorgang der Rückwand 2 geht nun in umgekehrter Folge vor sich. Ein Steuerventil 16 des Hydraulikzylinders wird auf Senken gestellt. Infolge des Eigengewichtes des Bügels 1 und der Rückwand 2 wird der Druckzylinder 5, welcher nun nicht mehr mit Drucköl beaufschlagt ist, eingefahren. Der Bügel 1 kehrt in seine horizontale Lage zurück, bis er auf der Oberkante O aufliegt. Das weitere Schliessen der Rückwand besorgt die Zugfeder 7, die selbige in eine etwa vertikale Lage zurückbringt. Durch die Feder 8 wird nun der Hebel 3 in seine vorderste Ausgangsstellung zurückgezogen, womit der Seilzug 6 nachgeben kann und der Riegel 4 hinter dem Bolzen 9 einrastet.

Der Verriegelungs- und Aushebemechanismus kann auch beidseitig am Ladewagen angebracht sein.

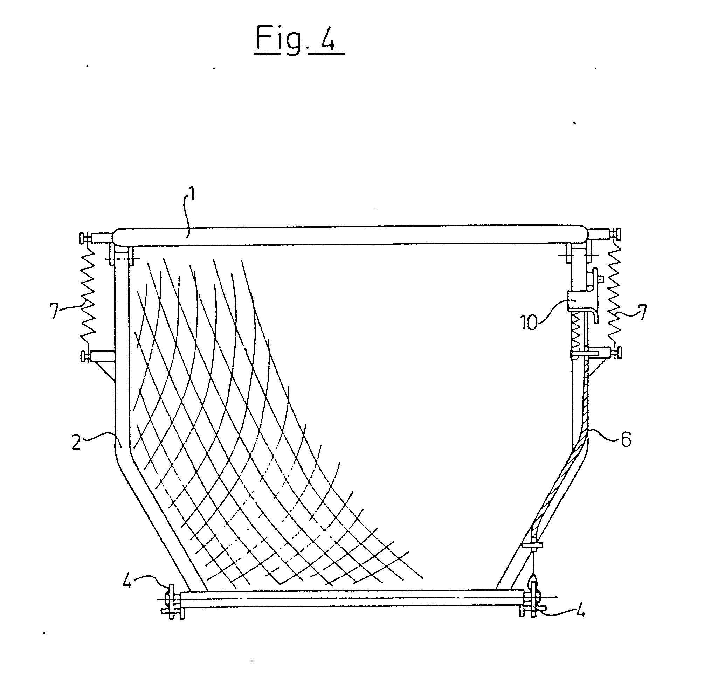

In Figur 4 ist eine Rückansicht nach Figur 1 auf die Ladewagenrückwand gezeigt, bei welcher der Aushebemechanismus einseitig und die Zugfeder 7 zweiseitig angeordnet ist. Die Rückwand 2 befindet sich dabei in Verriegelungsstellung; auf die Darstellung des Fahrwerks und des klappbaren Aufbaues wurde hierbei verzichtet.

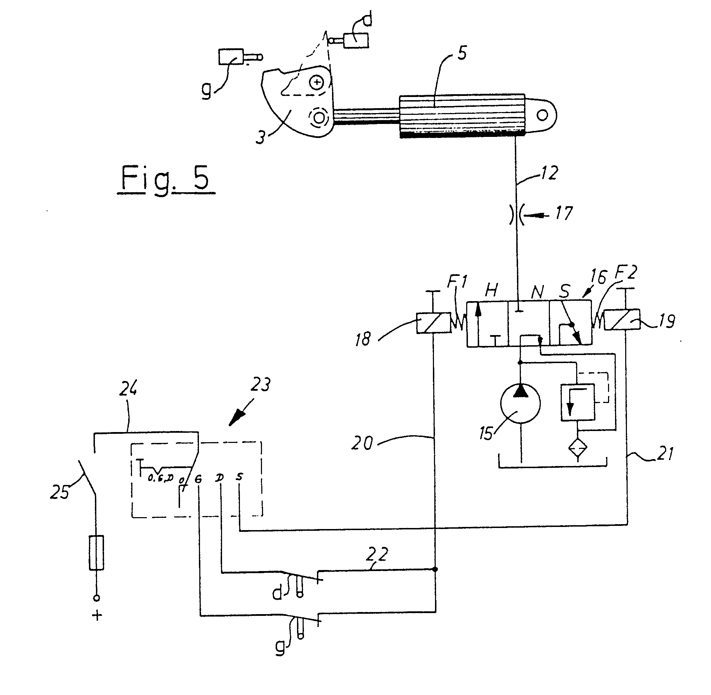

Figur 5 zeigt die Funktionssteuerung des Aushebemechanismusses. Dem Hebel 3 sind dabei zwei Endschalter g und d zugeordnet, welche beim Erreichen der Grünfutter- bzw. Dürrfutterentladestellung (Fig. 2 und 3) unterbrechend in den Stromkreis einwirken können. Der einfachwirkende Hydraulikzylinder 5 wird dabei, ausgehend von einer Hydropumpe 15 über ein 3/3 Wegeventil und einem Drosselventil 17 angesteuert. Der Ölstrom wird somit im Vor- wie im Rücklauf gedrosselt, um ein zu schnelles Anheben und Senken zu vermeiden. In der Figur 5 ist das Wegeventil 16 in seiner durch die Federn F1 und F2 gehaltene Neutralstellung gezeigt, bei welcher der Füllzustand des Hydraulikzylinders aufrechterhalten und damit die Aushebehöhe der Rückwand fixiert ist, d. h. es kann jede beliebige Zwischenstellung der Rückwand eingestellt werden. Zwei elektromagnetische Ventilschalter 18 und 19 sind an Masse angeschlossen und haben je eine Speiseleitung 20 bzw. 20, 22 und 21. Je nach dem, welche der beiden Speiseleitungen an Potential gelegt sind, nimmt das Wegeventil die Stellung «Heben» bzs. «Senken» ein.

Die Verbindung des Ventilschalter 18 mit der Stromquelle erfolgt nun über den vom Hebel 3 betätigbaren Schalter g und dem Handschalter 23 oder den vom Hebel 3 betätigbaren Schalter d und dem Handschalter 23, während die Verbindung des Ventilschalters 19 mit der Stromquelle nur über den Handschalter 23 erfolgt.

In Ruhestellung sind die beiden Schalter d und g geschlossen.

Der Handschalter 23 weist eine wirkungslose Schaltstellung "O" auf, die gerastet ist, sowie weitere gerastete Stellungen "G" und "D" in welchen der Hebekontakt mit der Speiseleitung 24 verbunden ist, sowie schliesslich eine getastete Schaltstellung S in der der Senkkontakt über die Speiseleitung 24 an die Stromquelle angeschlossen ist.

Die Funktionsweise der elektrohydraulischen Steuerung erfolgt wie nachstehend beschrieben:

Wird der Handhebel des Handschalters 23, bei über den Zündkontakt geschlossenen Schalter 25, auf "G" eingerastet, was gleichbedeutend mit Grünfutter-Entladestellung ist, so wird der Elektromagnet 18 über den geschlossenen Schalter g angesteuert. Dadurch wird das Wegeventil 16 auf "H" gleich Heben verschoben, womit der Hydraulikzylinder mit Druckmittel über die hydraulische Leitung 12 beaufschlagt wird und ausfährt. Der Hebel 3 wird dadurch verschwenkt, womit der bereits beschriebene Aushebevorgang der Rückwand 2 vorgenommen wird, bis die Entladestellung für Grünfutter erreicht ist. Beim Erreichen dieser Stellung wird der Schalter "g" durch den Hebel 3 beaufschlagt, womit dieser öffnet und somit die Stromzufuhr zum Elektromagnet 18 unterbricht. Das Wegeventil wird durch die Feder F2 wieder in die Neutralstellung "N" zurückgebracht womit die Zufuhr von Druckmittel zum Hydraulikzylinder unterbrochen ist. Die Rückführung von Druckmittel vom Hydraulikzylinder ist gesperrt, so dass der Hydraulikzylinder bzw. die Rückwand in dieser Lage verbleibt.

Will man die Rückwand 2 wieder schliessen, so wird der Handschalter 23 auf "S" gleich Senken gestellt. Es erfolgt eine Beaufschlagung des Elektromagneten 19, welcher das Wegeventil 16 auf Senken S verschiebt, womit der Rückfluss des Druckmittels erfolgt und die Rückwand 2 infolge ihres Eigengewichtes unter Einwirkung der Federn 7 in ihrer Verriegelungsstellung zurückkehrt. Mit dem Absenken der Rückwand 2 wird der Hebel 3 ebenfalls wieder zurückgeschwenkt, womit der Schalter "g" wieder seine Schliesstellung einnimmt und somit ein erneuter «Hebe-Befehl» ausgeführt werden kann.

Will man die Dürrfutterentladestellung erreichen, so stellt man den Handhebel 23 auf D womit ebenfalls das Magnetventil 18 über die Leitungen 22 und 20 angesteuert wird und das Wegeventil 16 auf Heben "H" verschiebt. Der Hydraulikzylinder wird nun solange mit Druckmittel beaufschlagt bis die Stellung für Dürrfutterentladung Figur 3 erreicht ist, wobei der Schalter "d" durch den Hebel 3 geöffnet wird und somit die Stromzufuhr zum Elektromagnet 18 unterbricht. Durch die Feder F2 wird das Wegeventil wieder in Neutralstellung N gebracht, das den Rückfluss des Druckmittels verhindert und somit die angehobene Rückwand 2 und den Bügel 1 in ihrer obersten Lage hält. Das Schliessen der Rückwand auf dieser Stellung erfolgt gleich wie das Schliessen aus der Grünfutterentladestellung, indem der Handschalter 23 auf Senken "S" gestellt wird und somit der Rücklauf des Druckmittels durch Verschieben des Wegeventils, durch Beaufschlagung des Elektromagnetes 19 geöffnet ist.

Vorteilhafterweise kann mit dieser Steuerung jede Zwischenstellung der Rückwand bzw. des Bügels eingestellt werden.

## Patentansprüche

1. Ladewagen mit einem Roll- oder Kratzboden, einen über einem festen Aufbau (A) angeordneten erhöhbaren Aufbau (B), sowie einer am Entladeende mittels mindestens eines einseitig am festen Aufbau (A) angelenkten Druckzylinders (5) über einen Aushebemechanismus ausschwenkbare Rückwand (2), die über eine Drehachse (2a) am freien Ende eines am festen Aufbau (A) schwenkbar angelenkten Bügels (1), der in seiner untersten Stellung eine etwa horizontale Lage einnimmt, schwenkbar angelenkt ist und über wenigstens einen federbelasteten Riegel (4) am festen Aufbau (A) verriegelbar ist, dadurch gekennzeichnet, dass der Aushebemechanismus aus einem mit radialem Abstand zu der Schwenkachse (2a) der Rückwand (2) drehbar gelagerten Hebel (3) gebildet wird, dessen freies Ende durch den Druckzylinder (5) beaufschlagt wird und einem Mitnehmer (11), der in den Schwenkbereich der Rückwand (2) bringbar ist, aufweist, sowie aus einer am Hebel (3) angelenkten und zum Riegel (4) geführten Entriegelungseinrichtung (6) und einem weiteren, mit der Rückwand (2) schwenkenden und in den Schwenkbereich des Bügels (1) bringbaren Mitnehmer (10).

2. Ladewagen nach Anspruch 1, dadurch gekennzeichnet, dass der Mitnehmer (10) für den Bügel (1) durch eine Anschlagfläche am Hebel (3) gebildet wird.

3. Ladewagen nach Anspruch 1, dadurch gekennzeichnet, dass der Mitnehmer (10) für den Bügel an der beweglichen Rückwand (2) befestigt ist.

4. Ladewagen nach Anspruch 1, dadurch gekennzeichnet, dass zwischen dem Bügel (1) und der Rückwand (2) wenigstens eine Feder (7) angeordnet ist, deren Anlenkpunkte in radialem Abstand zur Schwenkachsen (2a, 1a) der Rückwand und des Bügels liegen und die eine entgegen dem Druckzylinder (5) wirkende Kraft ausübt.

5. Ladewagen nach Anspruch 1, dadurch gekennzeichnet, dass der Anlenkpunkt (5a) des Druckzylinders (5) am festen Aufbau (A) bezogen auf die Fahrtrichtung (F), hinter und unterhalb der Schwenkachse (1a) des Bügels angelenkt und der Anlenkpunkt (5b) am Hebel derart zugeordnet ist, dass der lotrechte Abstand "L" der Wirkungslinie "W" des Druckzylinders (5) zur Schwenkachse (1a) des Bügels (1) in der untersten Stellung der Rückwand (2) annähernd «Null» beträgt und mit dem Anheben der Rückwand (2) anwächst.

6. Ladewagen nach Anspruch 1, dadurch gekennzeichnet, dass der Mitnehmer (11) für die Rückwand (2) vor dem Mitnehmer (10) für den Bügel (1) in Eingriff kommt, wobei der Mitnehmer (10) für den Bügel (1) erst beim Erreichen der Stellung «Grünfutterentladen» wirksam wird.

7. Ladewagen nach Anspruch 6, dadurch gekennzeichnet, dass bei Verschwenkung des Hebels (3) durch den Druckzylinder (5) aus der Verriegelungsstellung der Rückwand (2) auf seinem ersten Schwenkwinkel (α) die Entriegelungseinrichtung (6) des Riegels (4) betätigt wird und der Mitnehmer (11) für die Rückwand (2) bei weiterer Verschwenkung des Hebels (3) in Eingriff kommt.

8. Ladewagen nach Anspruch 1, dadurch gekennzeichnet, dass der Aushebemechanismus sowie die Verriegelung beidseitig des Ladewagens angebracht sind.

9. Ladewagen nach Anspruch 1, dadurch gekennzeichnet, dass in die Bewegungsbahn des Aushebemechanismusses Schaltelemente (d,g) angeordnet sind, wobei ein Schaltelement (g) beim Erreichen der «Grünfutter-Stellung» und ein weiteres Schaltelement (d) beim Erreichen der Dürrfutter-Stellung in einen auf «Heben» geschalteten Stromkreis, der ein Wegeventil (16) zur Beaufschlagung des Druckzylinders (5) steuert, unterbrechend einwirkt.

## Claims

1. A loader wagon having a moving or scraper conveyor base, a raisable structure (B) disposed above a fixed structure (A), and a rear wall (2) which is pivotable outwardly at the discharge end by means of at least one pressure cylinder (5), hingedly connected to one end of the fixed structure (A), via a lifting mechanism, said rear wall being pivotably connected, via a pivot (2a), to the free end of a frame (1) which is pivotally connected to the fixed structure (A) and, in its lowermost position, adopts ans approximately horizontal position, and said rear wall being lockable with the fixed structure (A) by means of at least one spring-loaded latch (4), characterised in that the lifting mechanism comprises a lever (3) pivotably mounted at a radial distance from the pivot (2a) of the rear wall (2), the free end of said lever being actuated by the pressure cylinder (5) and including a driver (11) which is capable of being brought into the pivotal range of the rear wall (2), and the lifting mechanisme also including an unlocking means (6), which is connected to the lever (3) and extends to the latch (4), and an additional driver (10) which pivots with the rear wall (2) and is capable of being brought into the pivotal range of the frame (1).

2. A loader wagon according to claim 1, characterised in that the driver (10) fot the frame (1) is formed by a stop face on the lever (3).

3. A loader wagon according to claim 1, characterised in that the driver (10) for the frame is secured to the movable rear wall (2).

4. A loader wagon according to claim 1, characterised in that at least one spring (7) is disposed between the frame (1) and the rear wall (2) and exerts a force acting in opposition to the pressure cylinder (5), the attachment points of said spring being located at a radial distance from the pivots (2a, 1a) of the rear wall and the clamp.

5. A loader wagon according to claim 1, characterised in that the attachment point (5a) of the pressure cylinder (5) is connected to the fixed structure (A) behind and beneath the pivot (1a) of the frame, relative to the direction of travel (F), and the attachment point (5b) is provided on the lever in such a manner that the vertical distance "L" between the line of action "W" of the pressure cylinder (5) and the pivot (1a) of the frame (1) is approximately «zero» in the lowermost position of the rear wall (2) and increases with the raising of the rear wall (2).

6. A loader wagon according to claim 1, characterised in that the driver (11) for the rear wall (2) engages before the driver (10) for the frame (1), the driver (10) for the frame (1) not becoming operative until the «green fodder discharge» position is reached.

7. A loader wagon according to claim 6, characterised in that the unlocking means (6) for the latch (4) is actuated when the lever (3) pivots through the pressure cylinder (5) from the locking position of the rear wall (2) to its first pivotal angle ($\alpha$), and the driver (11) for the rear wall (2) engages when the lever (3) is additionally pivoted.

8. A loader wagon according to claim 1, characterised in that the lifting mechanism and the locking means are mounted at both sides of the loader wagon.

9. A loader wagon according to claim 1, characterised in that switching members (d, g) are disposed in the path of motion of the lifting mechanisme, one switching member (g), when the «green fodder position» is reached, and an additional switching member (d), when the dry fodder position is reached, intermittently influencing a circuit which is switched to «lift» and controls a directional valve (16) for actuating the pressure cylinder (5).

**Revendications**

1. Chariot chargeur avec un plancher de fond mouvant ou râcleur, une structure élevable (3) montée au-dessus d'une structure fixe (A) ainsi qu'avec une paroi arrière (2) susceptible de pivoter vers l'extérieur, à l'extrémité de déchargement, par l'intermédiaire d'un mécanisme de relevage au moyen d'au moins un vérin à fluide sous pression (5) articulé unilatéralement à la structure fixe (A), laquelle est articulée de façon pivotante, par l'intermédiaire d'un axe de rotation (2a), à l'extrémité libre d'un étrier (1) articulé de façon pivotante à la structure fixe (A) et qui occupe une position sensiblement horizontale dans sa position la plus basse et laquelle paroi arrière est verrouillable sur la structure fixe (A) par l'intermédiaire d'au moins un verrou (4) chargé par ressort, caractérisé en ce que le mécanisme de relevage est constitué par un levier (3) monté de façon tournante sur la paroi arrière (2) à une certaine distance radiale de l'axe de pivotement (2a) et dont l'extrémité libre est sollicitée par le vérin à fluide de pression (5) et comporte un organe entraîneur (11) qui peut être amené dans la zone de pivotement de la paroi arrière (2) ainsi que par un dispositif de déverrouillage (6) articulé au levier (3) et menant au verrou (4) ainsi que par un autre organe entraîneur (10) pivotant avec la paroi arrière (2) et pouvant être amené dans la zone de pivotement de l'étrier (1).

2. Chariot de chargement selon la revendication 1, caractérisé en ce que l'organe entraîneur (10) pour l'étrier (1) est constitué par une surface de butée sur le levier (3).

3. Chariot de chargement selon la revendication 1, caractérisé en ce que l'organe entraîneur (10) pour l'étrier est fixé à la paroi arrière mobile (2).

4. Chariot de chargement selon la revendication 1, caractérisé en ce qu'entre l'étrier (1) et la paroi arrière (2) est disposé au moins un ressort (7) sont les points d'articulation sont situés à une certaine distance radiale des axes de pivotement (2a, 1a) de la paroi arrière et de l'étrier et qui exerce une force agissant à l'encontre du vérin à fluide sous pression (5).

5. Chariot de chargement selon la revendication 1, charactérisé en ce que le point d'articulation (5a) du vérin à fluide sous pression (5) à la structure fixe (A) est, par rapport au sens de marche (F), articulé en arrière et en dessous de l'axe de pivotement (1a) de l'étrier et le point d'articulation (5b) au levier est associé de telle façon que la distance verticale "L" de la ligne d'action "W" du vérin à fluide sous pression (5) à l'axe de pivotement (1a) de l'étrier (1) est approximativement «nulle» dans la position la plus basse de la paroi arrière (2) et croît avec le relevage de la paroi arrière (2).

6. Chariot de chargement selon la revendication 1, charactérisé en ce que l'organe entraîneur (11) pour la paroi arrière (2) entre en prise avant l'organe entraîneur (10) pour l'étrier (1), auquel cas l'organe entraîneur (10) pour l'étrier (1) devient actif seulement lorsque la position «décharger le fourrage vert» est atteinte.

7. Chariot de chargement selon la revendication 6, charactérisé en ce que, lors du pivotement du levier (3) par le vérin à fluide sous pression (5) de la position de verrouillage de la paroi arrière (2) jusqu'à son premier angle de pivotement ($\alpha$), le dispositif de déverrouillage (6) du verrou (4) est actionné et l'organe entraîneur (11) pour la paroi arrière (2) vient en prise lors d'un pivotement supplémentaire du levier (3).

8. Chariot de chargement selon la revendication 1, charactérisé en ce que le mécanisme de relevage ainsi que le relevage sont montés des deux côtés du chariot de chargement.

9. Chariot de chargement selon la revendication 1, charactérisé en ce que des éléments commutateurs (d, g) sont montés dans la trajectoire de mouvement du mécanisme de relevage, auquel cas un élément commutateur (g) agit de façon interruptrice, lorsque la «position de fourrage vert» est atteinte et un autre élément commutateur (d) agit de façon interruptrice lorsque la position fourrage sec est atteinte, dans un circuit de courant, commuté sur «levage», qui commande un distributeur (16) pour l'alimentation du vérin à fluide sous pression (5).

# Fig.1

# Fig. 2

Fig.3

# Fig. 4

Fig. 5